# EUROPÄISCHE PATENTSCHRIFT

(11) **EP 0 922 895 B1**
(45) Veröffentlichungstag und Bekanntmachung des Hinweises auf die Patenterteilung: **28.08.2002**
(21) Anmeldenummer: 98123281.2
(22) Anmeldetag: 07.12.1998
(51) Int. Cl.: F16L 3/233, B65D 63/10

(54) **Vorrichtung zum Binden eines langgestreckten Gegenstands**
Apparatus for binding an elongate element
Dispositif à relier un élément allongé

(30) Priorität: 11.12.1997 DE 29721937 U
(43) Veröffentlichungstag der Anmeldung: 16.06.1999
(73) Patentinhaber: Hellermann Tyton GmbH, 25436 Tornesch (DE)
(72) Erfinder: Matschiner, Bernd, Dr.-Ing., 25495 Kummerfeld (DE)
(74) Vertreter: Glawe, Delfs, Moll & Partner

(56) Entgegenhaltungen:
- EP-A- 0 389 831
- EP-A- 0 632 222

## Beschreibung

Die Erfindung betrifft eine Vorrichtung zum Binden eines langgestreckten Gegenstands, insbesondere Kabelbinder, die einstückig aus thermoplastischem Kunststoff aus einem Band und einem Element zum Befestigen des Bandes an einer Tragstruktur besteht.

Bekannte Vorrichtungen dieser Art (DE-U-295 10 606, DE-U-296 22 098, EP-A-389 831) bestehen insgesamt aus einem Kunststoff mit vergleichsweise hohem E-Modul, beispielsweise Polyamid. Zwar ist der Kunststoff nachgiebig genug, daß das Band um einen zu bindenden Gegenstand geschlungen werden kann. Die aus dem gebundenen Gegenstand, dem Band und dem Befestigungselement bestehende Einheit ist aber verhältnismäßig starr. Das hat den Nachteil, daß Stöße und Vibrationen von der tragenden Struktur über die Bindevorrichtung auf den gebundenen Gegenstand übertragen werden. Man hat deshalb formelastische Abschnitte in den Kabelbinder eingefügt, die aus wellenförmig verlaufenden Materialsträngen bestehen. Wenn man wünscht, daß das Band als solches nachgiebig ist, fügt man einen solchen Abschnitt in das Band selbst ein (DE-U-93 09 656, DE-C-28 13 484). Wenn man wünscht, daß das Band den zu bindenden Gegenstand immer straff umfaßt, aber elastisch abgestützt werden kann, setzt man den nachgiebigen Teil zwischen dem Bandschloß und dem Befestigungselement ein (DE-A-195 44 032).

Die formelastische Ausbildung des nachgiebigen Abschnitts hat den Nachteil, daß die Nachgiebigkeit durch die gewählte Form ein für allemal festgelegt ist, wenn ein Material bestimmten Elastizitätsmoduls vorausgesetzt wird. Dies ist meist der Fall, da sowohl das Befestigungselement als auch das Bandschloß im allgemeinen eine bestimmte Härte verlangen. Will man die Nachgiebigkeit variieren, muß man die Form verändern, was sehr aufwendig ist. Auch muß man damit rechnen, daß ein formnachgiebiger Abschnitt aufgrund der stellenweise in ihm wirkenden Biegekräfte mit der Zeit nachgibt oder ermüdet und dann zum Bruch neigt.

Diese Nachteile vermeidet die Erfindung durch die Merkmale des Anspruchs 1.

Durch Verwendung eines Materials mit abweichendem Elastizitätsmodul für den nachgiebigen Abschnitt besteht die Möglichkeit, die Nachgiebigkeit jederzeit durch geeignete Materialwahl in der gewünschten Weise zu bestimmen. Da damit gerechnet werden muß, daß der nachgiebige Abschnitt ständig unter Zugspannung steht, muß eine zuverlässige Verbindung zwischen den Teilen unterschiedlichen Elastizitätsmoduls vorhanden sein, die dadurch gewährleistet wird, daß diese Teile nicht nur heißplastisch aneinander angeformt sind, sondern dabei auch eine formschlüssige Verbindung eingehen. Die innige Verbindung, die sich dabei ergibt, kann durch Verschweißung unterstützt werden; erforderlich ist dies aber nicht.

Bei einer bevorzugten Ausführungsform besteht das gesamte Band aus dem Material geringeren Elastizitätsmoduls. Diese Ausführung ist insbesondere dann zweckmäßig, wenn die Oberfläche des zu bindenden Gegenstands durch bessere Anschmiegung des Bands geschont werden soll oder wenn das Band um besonders kleine Krümmungsradien biegbar sein soll oder wenn die Schließeinrichtung für das Band keine enge Längenabstufung ermöglicht und die spielfreie Anpassung der Bandlänge an die Zwischenmaße durch seine elastische Dehnung ermöglicht werden muß. Dies ist beispielsweise dann der Fall, wenn das Band - wie bekannt - mit einer Reihe von Öffnungen versehen ist, von denen eine über einen Haltevorsprung an dem Befestigungselement gehängt oder geknöpft wird.

Bei einer anderen bevorzugten Ausführungsform der Erfindung bestehen das Band und das Befestigungselement aus einem Werkstoff mit höherem Elastizitätsmodul als ein dazwischen gelegenes Verbindungsstück oder ein Teil dieses Verbindungsstücks. Dies ermöglicht es, für das Band eine Bauform zu wählen, für die man zweckmäßigerweise ein Material verhältnismäßig hohen Elastizitätsmoduls wählt. Dazu gehören gezahnte Bänder, die durch Verrastung in einem mit einer Rastklinke ausgerüsteten Schloß geschlossen werden.

In der Regel wird man so verfahren, daß das Material niedrigeren Schmelzpunkts (das ist meistens das Material mit dem geringeren Elastizitätsmodul) heißplastisch an das Material höheren Schmelzpunkts angeformt wird. Dabei geht man so vor, daß ein zuerst geformter, erster Teil der Bindevorrichtung vor dem Formen des zweiten Teils in dessen Form eingelegt wird.

Wenn ein nachgiebigeres Verbindungsstück zwischen zwei andere Teile einzufügen ist, müssen dabei diese beiden anderen Teile in die Form des Verbindungsstücks eingelegt werden. Um dies zu vereinfachen und diese beiden Teile in diesem Verarbeitungsschritt leichter handhabbar zu machen, werden sie nach der Erfindung einstückig mit einer Verbindung durch einen dünnen Steg aus demselben Material geformt, wobei der Steg anschließend durch das nachgiebigere Material umhüllt wird. Die Materialpaarung, die Temperaturen und die Dimensionen können dabei so gewählt sein, daß der Steg sich beim Einspritzen des heißplastischen, nachgiebigeren Materials in diesem mehr oder weniger auflöst und dadurch seine starre Verbindungswirkung verliert. Statt dessen ist es auch möglich, seine Reißkraft so zu bemessen, daß sie unterhalb der größten zu erwartenden Befestigungskraft liegt. In diesem Falle reißt der Steg, wenn beispielsweise eine stoßartige Belastung zwischen der Tragstruktur und den gebundenen Gegenstand auftritt, bevor durch die Starrheit der Verbindung Schäden auftreten können.

Unter der Einstückigkeit der Bindevorrichtung ist zu verstehen, daß ihre Teile so fest miteinander verbunden sind, daß sie wie ein Stück gehandhabt werden können.

Die Erfindung wird im folgenden näher unter Bezugnahme auf die Zeichnungen erläutert, die zwei vorteilhafte Ausführungsbeispiele veranschaulichen. Darin zeigen:
- Fig. 1: eine perspektivische Ansicht eines ersten Ausführungsbeispiels der erfindungsgemäßen Vorrichtung;
- Fig. 2: eine Draufsicht auf das erste Ausführungsbeispiel;
- Fig. 3: eine perspektivische Ansicht des Befestigungselements des ersten Ausführungsbeispiels;
- Fig. 4: eine Seitenansicht eines zweiten Ausführungsbeispiels der erfindungsgemäßen Vorrichtung; und
- Fig. 5: eine Draufsicht auf das zweite Ausführungsbeispiel.

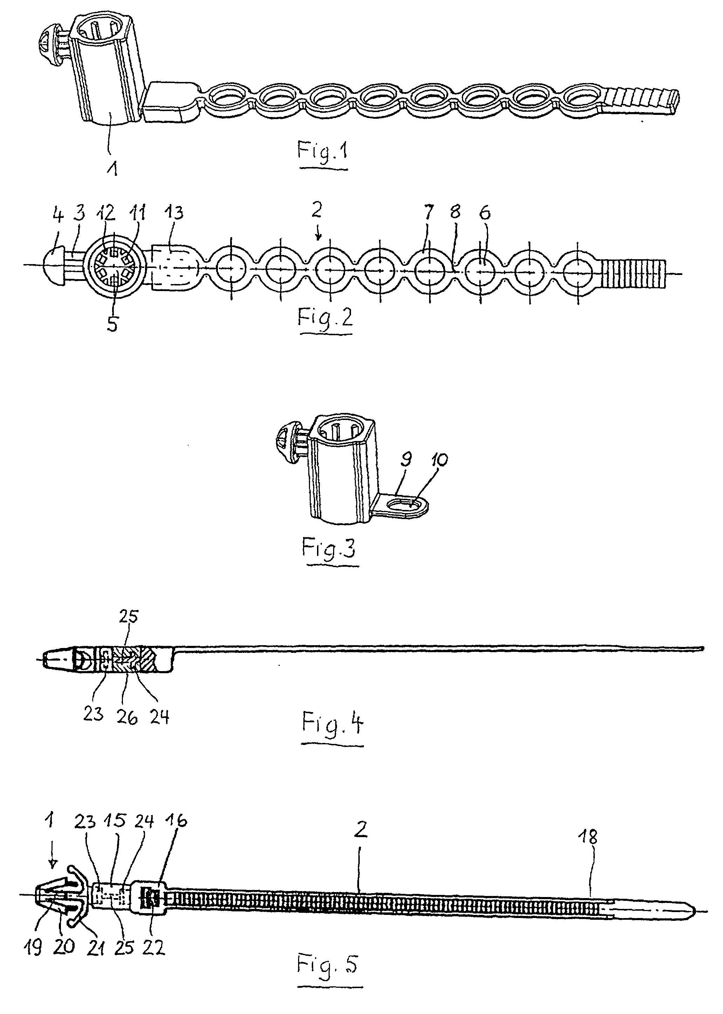

Im ersten Ausführungsbeispiel weist die erfindungsgemäße Vorrichtung ein Befestigungselement 1 und ein mit diesem einstückig verbundenes Band 2 auf. Das Befestigungselement besteht aus einer Hülse mit einer Öffnung 5, darin angeordneten Haltezungen 11 und Führungsrippen 12 sowie einem quer von der Hülse abstehenden Haltevorsprung 3 mit einer Verdickung 4 an seinem äußeren Ende als Halteeinrichtung für das freie Ende des Bandes 2. Die Öffnung 5 ist zur Aufnahme eines nicht dargestellten Bolzens einer ebenfalls nicht dargestellten Tragstruktur ausgebildet, die sich in Fig. 1 unterhalb des Befestigungselements befinden würde.

Auf der dem Haltevorsprung 3 gegenüberliegenden Seite der Hülse des Befestigungselements 1 ist an deren unterem, der Tragstruktur zugewandtem Ende das Band 2 mit der Hülse verbunden.

Das Band 2 ist von flacher, zungenartiger Gestalt. Es enthält eine Reihe von Öffnungen 6, die einen kreisrunden Querschnitt haben. Die die Öffnungen 6 berandenden Stege 7 sind in den zwischen den Öffnungen 6 gelegenen Abschnitten 8 eingeschnürt. Daraus ergibt sich eine formbedingte Dehnbarkeit des Bandes.

Die Weite der Öffnungen 6 des Bandes 2 entspricht etwa der Dicke des Haltevorsprungs 3 und ist etwas geringer als diejenige der Verdickung 4. Der Elastizitätsmodul des Bandes und die Abmessungen sind so gewählt, daß das um einen zu haltenden Gegenstand gespannte Band jeweils mit einer Öffnung 6 über den Haltevorsprung 3 geknöpft werden kann und sicher von diesem gehalten wird. Ferner sind der Elastizitätsmodul des Bandes und seine Abmessungen so gewählt, daß es trotz hinreichender Festigkeit Stößen und Vibrationen nachgeben kann. Seine Shorehärte liegt zweckmäßigerweise zwischen 30 und 90 Shore A. Demgegenüber wird die Härte des Befestigungselements zweckmäßigerweise höher als 60 Shore D gewählt.

Zur Verbindung des Bandes 2 mit dem Befestigungselement 1 ist an der dem Haltevorsprung 3 gegenüberliegenden Seite der Hülse ein einstückig aus demselben Material wie die Hülse bestehender Ansatz 9 vorgesehen, der die Form einer Öse mit einer Öffnung 10 hat. Die formschlüssige Verbindung 13 zwischen dem Befestigungselement 1 und dem Band 2 wird dadurch gebildet, daß der ösenförmige Ansatz 9 in das (in Fig. 2 linke) Ende des Bandes 2 eingebettet wird. Zweckmäßigerweise wird zuerst das Befestigungselement 1 hergestellt. Dieses wird in die Form des Bandes eingelegt, und anschließend wird durch Anspritzen des Bandes 2 die formschlüssige Verbindung 13 hergestellt. Auf diese Weise kann das Band 2 aus einem elastischeren Kunststoff mit geringerem E-Modul bestehen als das Befestigungselement 1.

Die Breite des Ansatzes 9 ist zweckmäßigerweise ein wenig geringer als die Breite des Bandes 2. Damit wird eine im Verhältnis zum Querschnitt des Ansatzes 9 große und günstige Querschnittsfläche der Hinterschneidung, nämlich der in Fig. 3 nach rechts weisenden Innenfläche der Öffnung 10, erreicht. Die Dicke des Bandes 2 ist im Bereich der Verbindung 13 zur Aufnahme des Ansatzes 9 etwas größer als im Bereich der Reihe von Öffnungen 6. Durch Verschweißung und Formschluß erreicht man so eine hinreichende Verbindungsfestigkeit.

Im zweiten Ausführungsbeispiel gemäß Fig. 4 und 5 besteht die erfindungsgemäße Vorrichtung aus einem Befestigungselement 1 und einem mit diesem einstückig verbundenen Band 2, die durch das Verbindungsstück 15 miteinander verbunden sind.

Das Befestigungselement 1 weist einen Bolzen 19 mit Haltezungen 20 auf, der mit einer Öffnung in einer nicht dargestellten Tragstruktur haltend zusammenwirkt. Dabei stützt sich das Befestigungselement 1 über Halteflügel 21 auf der Oberfläche der Tragstruktur ab. Das Band 2 von flacher, zungenartiger Gestalt weist mindestens auf einer Seite eine Zahnung und an seinem mit dem Befestigungselement verbundenen Ende ein Schloßelement 16 auf, in welchem sein freies, den zu bindenden Gegenstand umschlingendes, gespanntes Ende 18 durch eine mit der Zahnung zusammenwirkende Verriegelungseinrichtung 22 arretiert wird.

An die dem Band 2 zugewandte Seite des Befestigungselements 1 ist knopfartig ein Plättchen 23 über einen dünneren Hals einstückig und materialgleich angeformt. Ebenso ist an der zum Befestigungselement 1 weisenden Seite des Schloßelements 16 knopfartig ein Plättchen 24 einstückig und materialgleich angeformt. Die Plättchen 23, 24 sind durch einen dünnen Steg 25 miteinander verbunden. Das Befestigungselement 1 und das Band 2 sind somit einstückig und materialgleich ausgeführt. Sie sind zweckmäßigerweise in einem einheitlichen Formungsvorgang hergestellt. Die Plättchen 23, 24 und die sie mit dem Befestigungselement 1 bzw. dem Band 2 verbindenden Hälse sowie der Steg 25 sind von dem Verbindungsmaterial 26 eingebettet, das aus weicherem Material als das Verbindungselement 1 und das Band 2 besteht. Dieses Umhüllungsmaterial 26 des Verbindungsstücks 15 ist mit den einander zugewendeten Stirnflächen des Befestigungselements 21 und des Schloßelements 16 sowie mit den Plättchen 23, 24 und dem Steg 25 innig verbunden, da es aus dem heißplastischen Zustand daran angeformt ist. Vorzugsweise ist die Verbindung als Verschweißung oder schweißähnlich ausgebildet. Unbedingt erforderlich ist dies jedoch nicht, da zusätzlich ein Formschluß zwischen diesem Umhüllungsmaterial 26 und den Plättchen 23, 24 vorhanden ist, deren seitliche Ausdehnung etwas geringer ist als die des Umhüllungsmaterials 26.

Im Herstellungsgang können die durch den Steg 25 miteinander verbundenen Teile 1 und 2 wie ein Stück gehandhabt werden und insbesondere auch leicht in die Form eingelegt werden, die für die Formung des Verbindungsstücks 15 vorgesehen ist. Die Dicke des Stegs 25 ist so bemessen, daß er reißt, wenn eine bestimmte Maximalbelastung überschritten wird, die geringer als die Belastung bei denjenigen Stößen oder Vibrationen, vor denen der zu bindende Gegenstand sowie auch die Bindevorrichtung selbst geschützt werden sollen. Nachdem es gerissen ist, werden das Befestigungselement 1 und das Band 2 nur durch das weiche Umhüllungsmaterial 26 miteinander verbunden, das leichter nachgeben kann als das Material mit höherem Elastizitätsmodul, aus dem der Steg 25 besteht.

Alternativ kann auch vorgesehen sein, daß der Steg 25 bei Überlastung gedehnt wird, statt zu reißen. Schließlich besteht auch die Möglichkeit, daß der Steg 25 aufgrund seines geringen Querschnitts oder einer besonderen, beispielsweise mäandrischen Formgebung so nachgiebig ist, daß er ohne gleitende Verformung und ohne zu reißen der Forderung nach nachgiebiger Verbindung zwischen dem Befestigungselement 1 und dem Band 2, die hauptsächlich durch das elastische Material vermittelt wird, entspricht.

Das Befestigungselement und das Band einschließlich des Schlosses bestehen zweckmäßigerweise aus einem Kunststoff mit der Shorehärte 60 Shore D und höher. Dabei handelt es sich zweckmäßigerweise um ein Polyamid. Für das weichere Umhüllungsmaterial des Verbindungsstücks wählt man zweckmäßigerweise einen thermoplastischen Elastomer mit der Shorehärte zwischen 30 und 90 Shore (je nach Anwendungsfall).

Die Querabmessungen des Verbindungsstücks 15 sind zweckmäßigerweise ähnlich denen des Schloßelements 22, so daß sich ein fließender Übergang ohne störende Kanten ergibt.

Bei der dargestellten Ausführungsform stellt das Verbindungsteil 15 eine geradlinige Verbindung zwischen dem Befestigungselement 1 und dem Band 2 her. Dies ist günstig für die Handhabung des Bandes 2 und insbesondere für das Einfädeln des Bandendes 18 in das Schloßelement 16, jedoch sind auch winklige Ausführungen des Verbindungselements 15 denkbar und ggf. vorzuziehen.

## Patentansprüche

1. Vorrichtung zum Binden eines langgestreckten Gegenstands, insbesondere Kabelbinder, die einstückig aus thermoplastischem Kunststoff besteht und ein Band (2) und ein Element (1) zum Befestigen des Bandes an einer Tragstruktur umfaßt, **dadurch gekennzeichnet, daß** zumindest ein Teil des Bandes (2) oder eines das Band (2) mit dem Befestigungselement (1) verbindenden Teils (15) aus einem Material geringeren Elastizitätsmoduls als das Befestigungselement (1) besteht und daß die Teile unterschiedlichen Elastizitätsmoduls heißplastisch formschlüssig aneinander angeformt sind.

2. Vorrichtung nach Anspruch 1, **dadurch gekennzeichnet, daß** das im wesentlichen gesamte Band (2) aus dem Material geringeren Elastizitätsmoduls besteht.

3. Vorrichtung nach Anspruch 2, **dadurch gekennzeichnet, daß** das Band (2) eine Reihe von Öffnungen (6) enthält und am Befestigungselement (1) ein Haltevorsprung (3, 4) zum Zusammenwirken mit je einer der Öffnungen (6) vorgesehen ist.

4. Vorrichtung nach Anspruch 1, **dadurch gekennzeichnet, daß** das Band (2) und das Befestigungselement (1) aus einem Material mit höherem und ein dazwischen gelegenes Verbindungsstück (15) aus einem Werkstoff mit geringerem Elastizitätsmodul bestehen.

5. Vorrichtung nach Anspruch 4, **dadurch gekennzeichnet, daß** das Befestigungselement (1) und das Band (2) durch einen dünnen Steg (25) aus demselben Material miteinander verbunden sind.

6. Vorrichtung nach Anspruch 5, **dadurch gekennzeichnet, daß** die Reißkraft des Stegs (25) unterhalb der größten zu erwartenden Befestigungskraft liegt.

## Claims

1. An apparatus for a binding elongate article, in particular a cable binder, which is made in one piece from thermoplastics synthetic material and comprises a strap (2) and a member (1) for fastening the strap to a support structure, **characterised in that** at least one part of the strap (2) or a part (15) connecting the strap (2) to the fastening member (1) consists of a material having a lower modulus of elasticity than the fastening member (1), and **in that** the parts having a different modulus of elasticity are moulded thermoplastically in a form-locking manner one to the other.

2. An apparatus according to Claim 1, **characterised in that** substantially the entire strap (2) consists of a material of lower modulus of elasticity.

3. An apparatus according to Claim 2, **characterised in that** the strap (2) includes a row of openings (6) and on the fastening member (1) a retaining projection (3,4) is provided to co-operate with a respective one of the openings (6).

4. An apparatus according to Claim 1, **characterised in that** the strap (2) and the fastening member (1) consist of a material with a higher modulus of elasticity and a connecting member (15) disposed between them consists of a material with a lower modulus of elasticity.

5. An apparatus according to Claim 4, **characterised in that** the fastening member (1) and the strap (2) are joined together by a thin web (25) of the same material.

6. An apparatus according to Claim 5, **characterised in that** the breaking force of the web (25) is below the maximum fastening force to be expected.

## Revendications

1. Dispositif pour lier un élément allongé, en particulier collier pour câbles, qui est réalisé d'une pièce en matière thermoplastique et comprend une bande (2) et un élément (1) pour fixer la bande sur une structure porteuse, **caractérisé en ce qu'**au moins une partie de la bande (2) ou d'une pièce (15) reliant la bande (2) à l'élément de fixation (1) est réalisée en un matériau d'un module d'élasticité plus faible que l'élément de fixation (1) et **en ce que** les parties de différents modules d'élasticité sont formées l'une avec l'autre en engagement positif par procédé de matière plastique chaude.

2. Dispositif selon la revendication 1, **caractérisé en ce que** la bande (2) essentiellement tout entière est réalisée en un matériau d'un module d'élasticité plus faible.

3. Dispositif selon la revendication 2, **caractérisé en ce que** la bande (2) comporte une pluralité d'ouvertures (6) et **en ce qu'**un épaulement de retenue (3, 4) est prévu sur l'élément de fixation (1) pour s'engager avec l'une des ouvertures (6).

4. Dispositif selon la revendication 1, **caractérisé en ce que** la bande (2) et l'élément de fixation (1) sont réalisés en un matériau d'un module d'élasticité relativement élevé et une pièce de jonction (15) intercalée entre eux en un matériau d'un module d'élasticité plus faible.

5. Dispositif selon la revendication 4, **caractérisé en ce que** l'élément de fixation (1) et la bande (2) sont reliés entre eux par une mince barrette (25) du même matériau.

6. Dispositif selon la revendication 5, **caractérisé en ce que** la résistance à la rupture de la barrette (25) est inférieure à la force de fixation la plus élevée pouvant être attendue.
